# EUROPÄISCHE PATENTSCHRIFT

(11) **EP 2 742 513 B1**
(45) Veröffentlichungstag und Bekanntmachung des Hinweises auf die Patenterteilung: **09.05.2018**
(21) Anmeldenummer: 12742849.8
(22) Anmeldetag: 24.07.2012
(51) Int. Cl.: H01B 7/28, H01B 3/30, C23C 18/12, C09D 1/00, C09D 7/12

(54) **BESCHICHTUNG MIT HOHER KORONABESTÄNDIGKEIT, SOWIE HERSTELLUNGSVERFAHREN DAZU**
COATING HAVING HIGH CORONA RESISTANCE AND PRODUCTION METHOD THEREFOR
REVÊTEMENT À HAUTE RÉSISTANCE À L'EFFET CORONA ET PROCÉDÉ DE FABRICATION DUDIT REVÊTEMENT

(30) Priorität: 12.08.2011 DE 102011080884
(43) Veröffentlichungstag der Anmeldung: 18.06.2014
(73) Patentinhaber: Siemens Aktiengesellschaft, 80333 München (DE)
(72) Erfinder: PIHALE, Sven, 91792 Stopfenheim (DE); SEIDEL, Christian, 90571 Schwaig (DE)
(86) Internationale Anmeldenummer: PCT/EP2012/064476
(87) Internationale Veröffentlichungsnummer: WO 2013/023880

(56) Entgegenhaltungen:
- WO-A1-2009/046755
- WO-A1-2010/127693
- WO-A1-2011/057905

## Beschreibung

Die Erfindung betrifft eine Beschichtung für einen Kunststoff. Die Beschichtungen kann sowohl auf dreidimensionale Bauteile als auch auf Flächenstoffe wie Folien und Gewebematerialien aufgebracht werden.

Elektrische Maschinen (Transformatoren Motoren, Generatoren) besitzen je nach Leistung und Konstruktionsprinzip ein komplexes Isolierungssystem. Polymere Werkstoffe weisen für diese Anwendung gut geeignete elektrische Isolationseigenschaften auf, sind kostengünstig und einfach der benötigten Geometrie anzupassen. Nachteil dieser Werkstoffe ist in der Regel eine geringe Dauerbeständigkeit gegen elektrische Entladungen bei hoher Feldstärke.

Aus der WO 2011/057905 A1 ist eine elektrische Flächenisolierung bekannt, die eine hohe Koronastabilität gegen Erosion im elektrischen Feld hat, weil sie eine Beschichtung aus eine anorganischen nichtleitenden Material hat, die engmaschig vernetzt ist.

Aus der WO 2009/046755 A1 ist ein Isolationssystem mit modifizierter Oberfläche bekannt, das über ein Plasmaunterstütztes Beschichtungsverfahren aufbringbar ist.

Aus der WO 2010/127693 A1 ist eine härtbare Sol-Gel-Beschichtung bekannt, die einem elektrischen Isolationssystem eine verbesserte Erosions-Beständigkeit verleiht.

Aufgabe der vorliegenden Erfindung ist es, ein Material mit einer verbesserten Koronastabilität zur Verfügung zu stellen, das die Vorteile der polymeren Werkstoffe umfasst.

Die Aufgabe wird durch den Gegenstand der vorliegenden Erfindung, wie er durch die Beschreibung, die Figur und die Ansprüche offenbart wird, gelöst.
Entsprechend ist Gegenstand der vorliegenden Erfindung eine Beschichtung auf einem polymeren Isolierwerkstoff, die mehrere, maximal 10 Lagen umfasst und grundsätzlich silikatisch ist, wobei die Beschichtung eine geeignete Abmischung der silikatischen Grundeinheit mit organischen Resten enthält, damit sie auf flexible Substrate aufbringbar ist und die Schichtdicke der einzelnen Lage im Bereich von 0,1 bis 100 µm liegt, die einzelnen Lagen nasschemisch herstellbar sind, wobei die Precursoren Silan, Siloxan und/oder Silikat sind, wobei das Silan oder die Silan-haltige Verbindung und/oder das Siloxan oder die Siloxan-haltige Verbindung aus einem Precursor hergestellt ist, der entweder Tetraethylorthosilicat (TEOS) und/oder Methyltriethoxysilan enthält, wobei weiterhin der Anteil der organischen Reste innerhalb der Beschichtung von Lage zu Lage verändert ist, so dass der Anteil an anorganischen Si-O-Einheiten innerhalb der Beschichtung nach außen, also substratfern, ansteigt. Außerdem ist Gegenstand der Erfindung ein Verfahren zur Herstellung einer Beschichtung für einen polymeren Isolierwerkstoff, wobei über ein nasschemisches Verfahren die Beschichtung in mehreren Lagen aufgebracht wird, welche jeweils nach der Härtung eine kompakte Schicht mit einer Dicke im Bereich von 0,1 bis 100 µm pro Lage ergibt.
Die vorliegende Beschichtung ist grundsätzlich silikatisch, das heißt, dass der Hauptaufbau der einzelnen Lagen jeweils Si-O-Einheiten umfasst, die die hohe Koronastabilität bewirken, aber, um auf biegsame oder flexible Träger gut aufbringbar zu sein, noch - je nach Lage - verschiedene organische Reste und/oder organische Reste in verschiedenen Konzentrationen umfassen, die eine Flexibilität der Schicht und/oder Haftung der Beschichtung auf den flexiblen Oberflächen bewirken.

Beispiele für geeignete organische Reste sind modifizierte Organosilane, die als funktionelle Gruppen Epoxid-, Amino-, Acrylat-, und/oder Vinylgruppen enthalten. In diesem Fall entsteht eine Hybridpolymerschicht.
Die silikatische Beschichtung weist auf dreidimensionalen Bauteilen sowie auf Flächenstoffen wie Folien und Gewebematerialien eine Schichtdicke im Bereich 0,1 bis 100 µm, bevorzugt im Bereich von 0,1 bis 50 µm, pro Lage, auf.

Die Beschichtung kann insgesamt bis zu 10 Lagen umfassen, vorteilhafterweise umfasst sie bis zu 5 Lagen und insbesondere bevorzugt bis zu 3 Lagen. Nach einer vorteilhaften Ausführungsform, bei der insbesondere die Schichtdicke der Beschichtung und deren Flexibilität erhöht ist, umfasst die Beschichtung außer der Silan- und/oder Siloxankomponente noch ein klassisches Harzsystem wie Epoxid-, ungesättigte Polyester-, Polyester-, Phenol-, Cyanat-, Vinylester-, oder andere bekannte Harzsysteme.
Die Harzsysteme oder das Beschichtungssol selbst können dabei noch Füllstoffe enthalten, beispielsweise metalloxidische Materialien, Siliziumoxid, Aluminiumoxid, Siliziumkarbid und/oder Siliziumnitrid oder alle bekannten weiteren Partikelwerkstoffe, die die Wärmeleitfähigkeit im Vergleich zu ungefüllten Polymeren / silikatischen Schichten steigern.
Die einzelnen Lagen dienen der Anpassung der mechanischen Eigenschaften der Beschichtung. Zum Ausgleich von mechanischen Spannungen bei flexiblen Bändern und Folien oder aufgrund unterschiedlicher thermischer Ausdehnung von Beschichtungssubstrat und Beschichtung wird dabei ein Gradientenaufbau von polymerelastischer Struktur der Beschichtungslage substratnah und stark anorganischer Struktur der Beschichtungslage substratfern realisiert.

Es ist demnach vorteilhaft, dass die Beschichtung mehrere Lagen umfasst, dass die Lage, die -beispielsweise - an den polymeren Isolator anschließt, den höchsten Anteil an organischen Resten zur Flexibilisierung hat und die Lage, die am äußersten liegt, den höchsten Anteil an Si-O-Einheiten für die Gewährleistung der Koronastabilität hat.
Nach der Erfindung können kostengünstige, robust herzustellende und einzusetzende neue koronastabile Materiallösungen realisiert werden. Mit den hier vorgeschlagenen Materialansätzen können speziell für den Bereich der flexible Flächenstoffbeschichtung durch Einstellung des Hybridcharakters (Organische und anorganische Vernetzungsstruktur) die mechanischen Eigenschaften (Härte, Sprödigkeit, Flexibilität) in einem weiten Bereich eingestellt werden.
So können sowohl elektrisch robuste als auch mechanisch robuste Systeme gestaltet werden, die auch bei Biegebelastung der Flächenisolierstoffe zuverlässig eingesetzt werden.
Im Gegensatz zu bisher bekannten SiOx-Schichten, die über physikalische Verfahren (Physical Vapour Deposition, PVD) aufgebracht werden, können die Schichten so eingestellt werden, dass beschichtete Folienmaterialien unter thermooxidativer Belastung nicht zu einer beschleunigten Versprödung führen.

### Beispiel:

Die Aufbringung der verschiedenen Ansätze erfolgte über ein nasschemisches Verfahren. Geeignete Verfahren sind Rakelauftrag, Spincoating, Tauchen, Sprühen im Batchbetrieb für stückweise Substrate und in Rolle-zu-Rolle-Prozesse für kontinuierliche Bahnen wie Folien oder Gewebe.
Ein Materialansatz führt beispielweise zu einem Material mit Hybridcharakter, indem der anorganische Precursor Tetraethylorthosilicat (TEOS) mit dem Netzwerkwandler Methyltriethoxysilan (MTES) und Wasser (H₂O) gemischt wird. Je nach molarem Verhältnis des anorganischen Precursor TEOS und des organisch modifizierten Alkoxysilanes MTES ist es möglich, eine Variation der Eigenschaften vom "Silica-Glass" bis hin zum "Silica-Gummi" zu erzeugen.

Neben dem bereits schon vorhandenen organisch modifizierten Alkoxysilan MTES kann noch ein organofunktionelles Silan, welches selbst noch ein Netzwerk mit sich selbst und den anderen Bestandteilen ausbilden kann, in das Sol hinzugefügt werden. Es wird das 3-Glycidoxypropyltrimethoxylsilan (GPTMS) zusätzlich zum Sol TEOS:MTES dazugegeben. GPTMS kann sowohl ein anorganisches Netzwerk als auch eine organische Vernetzung eingehen.

Aufbringung des Ansatzes erfolgte über ein nasschemisches Rakelverfahren. Die Beschichtungslösungen wurden mit einem Spiralrakel auf die mit einem Ionisator gereinigte PET-Oberfläche aufgerakelt. Die beschichtete Seite wurde für mindestens 20h an der Luft abgelüftet/getrocknet. Nach dem Ablüften wurde die Schicht bei 95-100°C für 2,5 h ausgehärtet. Nach dem gleichen Schema wurde beim Beschichten der zweiten Seite vorgegangen.

Die Überprüfung der Eigenschaftsmerkmale auf Bezug der Erosionsstabilität erfolgte mit der Gleitanordnung IEC 343b. Diese ist in der Norm EN 60343 beschrieben und wird in Anlehnung an diese Norm für die Tests angewendet. Bei der Gleitanordnung entstehen TEs tangential zur Probenoberfläche. Die Proben werden über eine Zeit von 240 h den TE ausgesetzt und gealtert.

Aufnahme Oberflächeneffekte nach elektrischer Alterung: Isolierstoffproben zeigen nach einer Belastung mit TEs unterschiedlichste Effekte auf der Oberfläche. Häufigstes Merkmal ist der Erosionsabtrag, welcher laseroptisch qualitativ und quantitativ bestimmt werden kann.

### Ergebnisse:

Das erfindungsgemäße Sol bildet eine Schicht aus, welche nach 240 h nur eine punktuelle Erosion auf der Oberfläche zulässt. Die durchschnittliche Erosionstiefe der vier unterschiedlichen Probenfolien beträgt 18 µm. Dies bedeutet, dass die PET-Folie lokal nur bis zur Hälfte der Ausgangsdicke abgebaut wurde und keine Schädigung eingetreten ist, wie bei der Referenz.

Die einzige Figur zeigt einen Vergleich einer beschichteten PET-Isolierfolie mit der unbeschichteten PET-Folie mit Standardabweichung der einzelnen Proben.

Ganz deutlich zeigt sich der Unterschied in der Erosionstiefe der beiden Proben. Währen die unbeschichtete PET-Folie durch die Test eine Erosionstiefe von nahezu 225 µm zeigt, dringt die Erosion bei der beschichteten Folie um einen Faktor 10 niedriger ein, nur bis zu 25µm. Damit ist die Lebensdauer einer daraus gefertigten Isolierung um das 10-fache gesteigert.

Die Erfindung betrifft eine Beschichtung für einen isolierenden Werkstoff. Die Beschichtung kann sowohl auf dreidimensionale Bauteile als auch auf Flächenstoffe wie Folien und Gewebematerialien aufgebracht werden. Die Koronabeständigkeit wird durch eine Silan- und/oder Siloxankomponente in der nasschemisch herstellbaren Beschichtung deutlich erhöht.

## Patentansprüche

1. Beschichtung auf einem polymeren Isolierwerkstoff, die mehrere, maximal 10 Lagen umfasst und grundsätzlich silikatisch ist, wobei die Beschichtung eine geeignete Abmischung der silikatischen Grundeinheit mit organischen Resten enthält, damit sie auf flexible Substrate aufbringbar ist und die Schichtdicke der einzelnen Lage im Bereich von 0,1 bis 100 µm liegt, die einzelnen Lagen nasschemisch herstellbar sind, wobei die Precursoren Silan, Siloxan und/oder Silikat sind, wobei das Silan oder die Silan-haltige Verbindung und/oder das Siloxan oder die Siloxan-haltige Verbindung aus einem Precursor hergestellt ist, der entweder Tetraethylorthosilicat (TEOS) und/oder Methyltriethoxysilan enthält, wobei weiterhin der Anteil der organischen Reste innerhalb der Beschichtung von Lage zu Lage verändert ist, so dass der Anteil an anorganischen Si-O-Einheiten innerhalb der Beschichtung nach außen, also substratfern, ansteigt.

2. Beschichtung nach Anspruch 1, wobei der Anteil der organischen Resten innerhalb der Beschichtung von Lage zu Lage verändert ist und die Lage, die an den polymeren Isolator anschließt, den höchsten Anteil an organischen Resten zur Flexibilisierung hat.

3. Beschichtung nach Anspruch 1 oder 2, wobei die siliziumorganischen Bestandteile modifizierte Organosilane sind, die als funktionelle Gruppen Epoxid-, Amino-, Acrylat-, und/oder Vinylgruppen enthalten.

4. Beschichtung nach einem der Ansprüche 1 bis 3, wobei das System noch Füllstoffe, beispielsweise metalloxidisches Material, Siliziumoxid, Aluminiumoxid, Siliziumkarbid und/oder Siliziumnitrid umfasst.

5. Beschichtung nach einem der vorstehenden Ansprüche, wobei die Beschichtung noch ein klassisches Harzsystem wie Epoxid-, ungesättigte Polyester-, Polyester-, Phenol-, Cyanat-, Vinylester-, oder andere bekannte Harzsysteme umfasst.

6. Verfahren zur Herstellung einer Beschichtung nach einem der Ansprüche 1 bis 5, wobei über ein nasschemisches Verfahren die Beschichtung in mehreren Lagen aufgebracht wird, welche jeweils nach der Härtung eine kompakte Schicht mit einer Dicke im Bereich von 0,1 bis 100 µm pro Lage ergibt.

## Claims

1. Coating on a polymeric insulating material that comprises a plurality of, at most 10, layers and is fundamentally silicatic, the coating comprising a suitable blend of the silicatic base unit with organic radicals to allow it to be applied to flexible substrates, and the coat thickness of the individual layer being in the range from 0.1 to 100 µm, the individual layers being wet-chemically producible, the precursors being silane, siloxane and/or silicate, the silane or the silane-containing compound and/or the siloxane or the siloxane-containing compound having been prepared from a precursor which comprises either tetraethyl orthosilicate (TEOS) and/or methyltriethoxysilane, furthermore the fraction of the organic radicals within the coating being altered from layer to layer, so that the fraction of inorganic Si-O units within the coating increases outwardly, in other words away from the substrate.

2. Coating according to Claim 1, the fraction of the organic radicals within the coating being altered from layer to layer and the layer which is adjacent to the polymeric insulator having the highest fraction of organic radicals for flexibilization.

3. Coating according to Claim 1 or 2, the organosilicon constituents being modified organosilanes which comprise epoxide, amino, acrylate, and/or vinyl groups as functional groups.

4. Coating according to any of Claims 1 to 3, the system further comprising fillers, as for example metal-oxide material, silicon oxide, aluminum oxide, silicon carbide and/or silicon nitride.

5. Coating according to any of the preceding claims, the coating further comprising a conventional resin system such as epoxy, unsaturated polyester, polyester, phenolic, cyanate, vinyl ester, or other known resin systems.

6. Method for producing a coating according to any of Claims 1 to 5, the coating being applied, via a wet-chemical process, in a plurality of layers each of which, after curing, produces a compact coat having a thickness in the range from 0.1 to 100 µm per layer.

## Revendications

1. Revêtement sur un matériau isolant polymère qui comporte plusieurs feuilles, au maximum 10, et est essentiellement siliceux, le revêtement contenant un mélange approprié de l'unité de base siliceuse avec des radicaux organiques, afin qu'il puisse être appliqué sur des substrats souples et que l'épaisseur de couche de la feuille individuelle soit comprise dans la gamme allant de 0,1 à 100 µm, les feuilles individuelles pouvant être préparées par voie chimique humide, dans lequel les précurseurs sont un silane, un siloxane et/ou un silicate, dans lequel le silane ou le composé contenant un silane et/ou le siloxane ou le composé contenant un siloxane sont préparés à partir d'un précurseur qui contient soit de l'orthosilicate de tétraéthyle (TEOS), soit du méthyltriéthoxysilane, soit les deux, dans lequel en outre la proportion des radicaux organiques à l'intérieur du revêtement est modifiée de feuille à feuille de telle sorte que la proportion en unités Si-O inorganiques à l'intérieur du revêtement augmente vers l'extérieur, également à distance du substrat.

2. Revêtement selon la revendication 1, dans lequel la proportion des radicaux organiques à l'intérieur du revêtement est modifiée de feuille à feuille et la feuille qui est adjacente à l'isolant polymère a la proportion la plus élevée en radicaux organiques pour l'assouplissement.

3. Revêtement selon la revendication 1 ou la revendication 2, dans lequel les constituants d'organosilicium sont des organosilanes modifiés qui contiennent en tant que groupes fonctionnels des groupes époxyde, amino, acrylate, et/ou vinyle.

4. Revêtement selon l'une des revendications 1 à 3, dans lequel le système comporte encore des charges, par exemple une matière oxyde métallique, l'oxyde de silicium, l'oxyde d'aluminium, le carbure de silicium et/ou le nitrure de silicium.

5. Revêtement selon l'une des revendications précédentes, le revêtement comportant encore un système de résine classique comme un système de résine époxyde, polyester insaturé, polyester, phénol, cyanate, ester vinylique, ou d'autres systèmes de résine connus.

6. Procédé pour la préparation d'un revêtement selon l'une des revendications 1 à 5, dans lequel le revêtement est appliqué en plusieurs feuilles par l'intermédiaire d'un procédé par voie chimique humide, ce qui permet d'obtenir respectivement après le durcissement une couche compacte avec une épaisseur comprise dans la gamme allant de 0,1 à 100 µm par feuille.
